# FASCICULE DE BREVET EUROPEEN

(11) **EP 2 222 399 B1**
(45) Date de publication et mention de la délivrance du brevet: **18.09.2013**
(21) Numéro de dépôt: 08875630.9
(22) Date de dépôt: 20.11.2008
(51) Int. Cl.: B01J 23/42, B01J 23/656, B01J 23/889, B01J 37/02, B01J 37/20, C10G 35/09, B01J 23/56

(54) **PROCÉDÉ DE PRÉPARATION D'UN CATALYSEUR DE REFORMAGE COMPRENANT UN SUPPORT, UN MÉTAL DU GROUPE VIII ET UN MÉTAL DU GROUPE VIIB**
VERFAHREN ZUR HERSTELLUNG EINES REFORMIERKATALYSATORS MIT EINEM SUBSTRAT, EINEM METALL DER GRUPPE VIII UND EINEM METALL DER GRUPPE VIIB
METHOD FOR PREPARING A REFORMING CATALYST INCLUDING A SUBSTRATE, A METAL OF GROUP VIII AND A METAL OF GROUP VIIB

(30) Priorité: 29.11.2007 FR 0708360
(43) Date de publication de la demande: 01.09.2010
(73) Titulaire: IFP Energies nouvelles, 92852 Rueil-Malmaison Cedex (FR)
(72) Inventeur: OUDART, Yohan, 93500 Pantin (FR)
(86) Numéro de dépôt international: PCT/FR2008/001628
(87) Numéro de publication internationale: WO 2009/098386

(56) Documents cités:
- FR-A- 2 006 803
- GB-A- 2 096 481
- US-A- 3 617 519
- US-A- 3 972 829
- US-A- 4 333 854
- US-A- 4 369 129

## Description

### Domaine de l'invention :

Dans ce texte, les groupes d'éléments chimiques sont données selon la classification CAS décrite dans CRC Handbook of Chemistry and Physics, éditeur CRC press, rédacteur en chef D.R. Lide , 81ème édition, 2000-2001.

L'invention est relative à une méthode de préparation de catalyseurs de reformage. Il existe deux grandes catégories de catalyseurs de reformage. D'une part, les catalyseurs pour lits fixes qui comprennent généralement du platine et du rhénium. D'autre part, des catalyseurs pour lits mobiles qui comprennent généralement du platine et de l'étain.

Les catalyseurs pour lits fixes qui comprennent généralement du platine et rhénium sont très stables dans le temps et ils sont régénérés tous les 3 à 24 mois. Cependant, ils présentent une activité hydrogénolysante trop importante au début de chaque cycle catalytique. Cette activité parasite peut être diminuée grâce à l'ajout de soufre à la fin de la préparation du catalyseur de reformage ou au début du cycle catalytique. Le soufre est généralement introduit, sous atmosphère réductrice, par l'intermédiaire d'H₂S. Cependant la toxicité de l'H₂S le rend peut commode à utiliser. L'utilisation de composés soufrés du type polysulfures a aussi été décrite. Cette étape de sulfuration est cependant indépendante des autres étapes de préparation du catalyseur.

L'objet de la présente invention est un procédé de sulfuration utilisant des agents réducteurs pour la formation de complexes de coordination de métal du groupe VIIB, en particulier du rhénium. Les rendements C₅₊ et reformat sont notamment améliorés. De plus, la préparation du catalyseur est simplifiée puisque l'étape de sulfuration n'est plus indépendante mais intégrée à une étape d'imprégnation. Enfin, l'utilisation de complexants permet de diminuer la quantité d'acide chlorhydrique utilisée dans la préparation.

### Art antérieur :

L'ajout de soufre en même temps que le rhénium afin de préparer un catalyseur platine-rhénium est décrit dans le brevet US4246095 qui décrit l'utilisation d'un complexe organométallique. En effet, ce brevet décrit l'utilisation d'un composant rhénium-carbonyle contenant du soufre.

Le procédé de préparation selon l'invention se distingue notamment par l'utilisation d'agents réducteurs pour la formation de complexes de coordination de métal du groupe VIIB, en particulier du rhénium.

Le brevet US 3,972,829 décrit la préparation de catalyseur comprenant au moins du platine et éventuellement du rhénium par l'intermédiaire de complexants. Les complexants utilisés sont des acides organiques contenant du soufre comme par exemple les thio-acides et les acides thiocarboxyliques.

Le procédé de préparation selon l'invention se distingue notamment par l'utilisation d'agents réducteurs pour la formation de complexes de coordination de métal du groupe VIIB, en particulier du rhénium.

US 4 333 854 A1 décrit une méthode de préparation d'un catalyseur comprenant un support, préférentiellement de l'alumine, un métal du groupe du platine, du rhénium, du soufre et un halogène, préférentiellement du chlore. Le support est d'abord imprégné avec le platine et le chlore. Cette étape est suivie de l'imprégnation avec un composé carbonyle du rhénium dans un solvant organique suivi de l'évaporation du solvant et de la pyrolyse sous courant d'hydrogène du composé carbonyle. Le produit résultant est présulfuré en présence mercaptans de bas poids moléculaires ou des sulfures organiques, de préférence d'un mélange de sulfure d'hydrogène et d'hydrogène. Bien que le procédé de préparation selon US 4 333 854 A1 prévoit une étape finale indépendante de sulfuration, l'apport de soufre est aussi obtenu par l'utilisation de composés carbonyle du rhénium comprenant du soufre. Dans cet exemple, l'imprégnation du composé du rhénium est réalisée sous atmosphère inerte (azote), dans un solvant organique et sans étape finale indépendante de sulfuration.

FR 2 006 803 A1 décrit la préparation d'un catalyseur par imprégnation du métal du groupe du platine avec une solution aqueuse d'un composé du métal à imprégner en présence d'acide chlorhydrique. Le produit résultant de cette étape est séché puis calciné. Dans une deuxième étape le composé du rhénium est imprégné de préférence en l'absence de composé comprenant du soufre. Le catalyseur ainsi obtenu est soumis à une étape de sulfuration en présence d'hydrogène sulfureux ou de mercaptans de poids moléculaires inférieurs. Le catalyseur est utiliser dans un procédé de reformage de charges d'hydrocarbures. Le problème technique de D2 est en particulier d'améliorer l'activité, la sélectivité en produits C5+ et la stabilité du catalyseur.

### Description sommaire de l'invention

L'invention concerne un procédé de préparation d'un catalyseur de reformage comprenant un support, un métal du groupe VIIIB et un métal du groupe VIIB, ledit procédé comprenant les étapes suivantes dans l'ordre a) puis b) ou b) puis a):
- une étape a) d'imprégnation du support par une solution aqueuse d'acide chlorhydrique comprenant un métal du groupe VIII,
- une étape b) d'imprégnation du support par une solution aqueuse comprenant un métal du groupe VIIB et un complexant soufré en environnement réducteur, ledit environnement réducteur est sélectionné dans la groupe constitué par les solutions réductrices comprenant au moins un composé inorganique réducteur sélectionné dans le groupe constitué par les dérivés du phosphore, par les dérivés azotés et par les dérivés soufrés et comprenant, par rapport au métal du groupe VIIB, entre 0,1 à 20 equivalents de composés inorganiques réducteurs.

### Description détaillée de l'invention

L'invention concerne un procédé de préparation d'un catalyseur de reformage comprenant un support, un métal du groupe VIIIB et une métal du groupe VIIB, ledit procédé comprenant les étapes suivantes dans l'ordre a) puis b) ou b) puis a):
- une étape a) d'imprégnation du support par une solution aqueuse d'acide chlorhydrique comprenant un métal du groupe VIII,
- une étape b) d'imprégnation du support par une solution aqueuse comprenant un métal du groupe VIIB et un complexant soufré en environnement réducteur, ledit environnement réducteur est sélectionné dans le groupe constitué par les solutions réductrices comprenant au moins un composé inorganique réducteur sélectionné dans le groupe constitué par les dérivés du phosphore, par les dérivés azotés et par les dérivés soufrés et comprenant, par rapport au métal du groupe VIIB, entre 0,1 à 20 équivalents de composés inorganiques réducteurs.

L'ajout de complexant soufré en environnement réducteur au cours de l'étape b), permet de former des complexes de coordination avec le métal du groupe VIIB.

Le support du catalyseur est généralement sélectionné dans le groupe constitué par les oxydes de magnésium, les oxydes de titane, les oxydes de zirconium, l'alumine, la silice, ces supports étant pris seuls ou en mélange. Le support préféré est de l'alumine.

La surface spécifique du support est généralement comprise entre 50 et 600 m²/g, de préférence entre 150 et 400 m²/g.

Le catalyseur se présente généralement dans le lit catalytique sous forme de billes, d'extrudés ou de trilobes et de façon préféré sous forme d'extrudés.

Selon une variante, l'environnement réducteur est une solution réductrice comprenant au moins un composé inorganique réducteur sélectionné dans le groupe constitué par les dérivés du phosphore, de préférence le phosphore élémentaire, les acides phosphoniques, phosphoreux, hypophosphoniques/hypophosphoreux ainsi que les sels dérivés.

L'environnement réducteur peut aussi être une solution réductrice comprenant au moins un composé inorganique réducteur sélectionné dans le groupe constitué par les dérivés azotés, de préférence l'hydrazine et ses dérivés, l'hydroxylamine, les oxydes de diazotes et les nitrites,

Il peut aussi être une solution réductrice comprenant au moins un composé inorganique réducteur sélectionné dans le groupe constitué par les dérivés soufrés, de préférence les sulfites et leurs dérivés (bi et polysulfites), l'acide sulfureux et ses sels, le soufre élémentaire.

Le complexant soufré est généralement un composé pour lesquels le soufre n'est lié qu'avec un seul atome de carbone.

Le complexant soufré comprend généralement au moins une fonction sélectionnée dans le groupe constitué par les fonctions thiol, les fonctions thiol en association avec une fonction acide carboxylique, les thiocétones, les thioaldéhydes et les acides thiocarboxyliques. Il s'agit de toutes les fonctions pour lesquels le soufre n'est lié qu'avec un seul atome de carbone. Cela désigne par exemple les fonctions: C=S, C-S-H, C-S-S... En effet, dans ces fonctions, le soufre possède un bon pouvoir coordinant. En effet, la liaison carbone soufre est difficile à rompre. Cela augmente la stabilité du soufre et diminue donc son aptitude à se lier aux métaux. Cette catégorie exclut les thioéthers. De préférence, le composé pour lesquels le soufre n'est lié qu'avec un seul atome de carbone est sélectionné dans le groupe constitué par:
- le diéthyldithiocarbamate de sodium, l'éthyl xanthate de potassium, les acides thiomalique, thioglycolique, méthanethiolique, éthanethiolique, propanethiolique, l'éthanedithiolique, propanedithiolique, mercaptoacétique, 3-mercaptopropionique, 2-mercaptosuccinique, carboxyméthylmercaptosuccinique, 2-mercaptonicotinique,
- les dérivés soufrés de l'EDTA, l'acide thiobis(ethylenenitrilo)tetraacétique, l'éthylenebis(thioethylenenitrilo)tetraacétique, thiobis(ethylenenitrilo)tetraacétique 2-hydrixy-5sulfo-1,3-phenylenbis(méthylenenitrilo)tetraacétique, l'acide (éthanediylidenetetrathio)tetraacétique,
- l'éthanethiol, les butanethiols, propanethiols, pentanethiols, hexanethiols, cyclohexanethiols, éthanedithiols, toluenedithiols, dimercapto propanol, la cystéine, le 2,3-dimercapto-1-propanol, l'acide 2,3 dimercaptopropane-1sulfonique, penicillamine, l'imidazole-2-thiol, la 2-thiazoline-2-thiol, la pyridine-2-thiol
- la thiourée.

Le complexant soufré peut aussi être sélectionné dans le groupe constitué par les sulfates et l'acide sulfurique.

Selon une variante de l'invention, le complexant soufré peut aussi contenir d'autres fonctions coordinantes (tels que les fonctions acides carboxylique, amines...).

Des complexants additionnels peuvent être ajoutés pour compléter la sphère de coordination du métal. Leur ajout n'est cependant pas indispensable. La solubilité en milieu aqueux de tous les complexants (soufrés ou non) est appréciée.

Ces ligands peuvent être de nature variée. Ils ne contiennent pas d'atome de soufre. Les acides carboxyliques sont particulièrement appréciés comme par exemple les acides acétique, acrylique, adipique, aspartique, carbamique, chloroacétique, citrique, diethylmalonique, dihydroxymaleique, formique, fumarique, gluconique, glutamique, glutarique, glycolique, glyoxylique, iminodiacétique, lactique, maléique, malique, malonique, nitriloacétique, o-aminobenzoique, oxalique, phthalique, pimelique, subérique, succinique, tartrique, citrique....mais aussi les acides aminés non soufrés, les acide di-, tri-, tetra-, penta et heaxaacétique comme les acides nitriloacétique, pentétique, l'EDTA et leurs dérivés.

Les autres complexants utilisables sont les 1,3-dicétones comme l'acétylacétone, ses sels et ses dérivés, notamment fluorés comme le trifluoroacétylacétone, les polyamines comme l'éthylène diamine et ses dérivés tri- et tetraaminés, les aminoalcools comme la triéthanolamine.

Le procédé de préparation d'un catalyseur peut comprendre à la suite des étapes a) puis b) ou b) puis a), l'étape c) de séchage puis de calcination sous atmosphère inerte ou oxydante, la température de séchage étant comprise entre 80 et 200°C, de préférence entre 100°C et 150°C pendant de 5 minutes à 5 jours, la température de calcination étant comprise entre 300 et 850°C entre 5 minutes et 20h, de préférence entre 20 minutes et 16 heures.

Le procédé de préparation du catalyseur peut comprendre à la suite de l'étape c), une étape d) de réduction sous hydrogène du catalyseur à une température comprise entre 300 et 850°C pendant 5 minutes à 20h, de préférence entre 20 minutes et 16 heures.

Selon une variante, le procédé de préparation du catalyseur peut comprendre en outre une étape d'imprégnation, entre l'étape a) et b), avant l'étape a) ou après l'étape b), par une solution comprenant au moins un métal promoteur sélectionné dans le groupe formé par le scandium, l'yttrium, l'étain, le germanium, l'indium, l'antimoine, le plomb, le thallium, le gallium, le bismuth, le phosphore, l'arsenic, les lanthanides et les actinides.

La teneur finale en élément du groupe VIIIB dans le catalyseur est généralement comprise entre 0,01% poids et 5 % poids, de préférence entre 0,01 % poids et 2 % poids
La teneur finale en élément du groupe VIIB dans le catalyseur est généralement comprise entre 0,01 % poids et 7 % poids, de préférence entre 0,01 % poids et 3 % poids
La teneur finale en soufre dans le catalyseur est généralement comprise entre 1 ppm poids et 5% poids, de préférence entre 10 ppm poids et 3% poids, de façon très préférée entre 100 et 5000 ppm poids.

Afin d'obtenir une teneur finale en soufre comprise entre 100 et 5000 ppm poids, les méthodes suivantes sont possibles:
Une première méthode consiste à utiliser des complexants n'ayant qu'un atome de soufre.
Une seconde méthode consiste à utiliser des complexants polysoufrés. Dans ce cas, une partie du rhénium est introduite sans complexant soufré. Ce rhénium est introduit soit avant, soit pendant ou soit après l'imprégnation par le complexe de coordination rhénium/complexant soufré. L'avantage de cette seconde méthode par rapport à la méthode sans complexant est de mettre moins d'acide dans la préparation.

La teneur finale en chlore dans le catalyseur est généralement comprise entre 0,1% poids et 15% poids, de préférence entre 0,3 et 10%.

Selon une variante, la solution comprenant du platine est une solution aqueuse d'acide hexachloroplatinique en présence d'acide chlorhydrique.

Selon une variante, la solution comprenant du rhénium est de l'acide perrhénique ou du perrhénate d'ammonium.

Un catalyseur peut être obtenu par le procédé de préparation précédent.

Un catalyseur préparé selon le procédé de préparation précédent peut être mis en oeuvre dans des réactions de reformage, la charge comprenant des hydrocarbures paraffiniques, naphténiques et aromatiques contenant de 5 à 12 atomes de carbone par molécule, ladite charge est mise en contact avec le catalyseur à une température comprise entre 400 et 700°C. Le débit massique de charge traitée par unité de masse du catalyseur est compris entre 0,1 et 10 kg/(kg.h). La pression opératoire est comprise entre 0,1 et 4 MPa.

Une partie de l'hydrogène produit est généralement recyclé selon un taux de recyclage molaire compris entre 0,1 et 10. Ce taux est le rapport molaire débit d'hydrogène recyclé sur débit de charge.

### Exemple

### exemple 1 (non conforme): préparation du catalyseur A

### étape a)

Le support est une alumine de surface spécifique 210 m² par gramme.

100 g de support sont mis en contact avec 500 cm³ d'une solution aqueuse d'acide chlorhydrique et d'acide hexachloroplatinique comprenant 0,30 g de platine.

La quantité d'acide chlorhydrique est ajustée afin d'avoir une teneur en chlore proche de 1 % dans le catalyseur final. La solution d'imprégnation est alors soutirée.

### étape b)

650 cm³ d'une solution aqueuse comprenant 0,86 g de rhénium introduit sous forme de perrhénate d'ammonium, est chauffée pendant 4 h et mise en contact avec le support comprenant du platine obtenu à l'issu de l'étape précédente pendant 3 heures.

### étape c)

Le support obtenu à l'issue de l'étape précédente est séché 1 heure à 120°C calciné pendant 2 heures à 500 °C, réduit sous hydrogène 2H à 500°C.

### étape d)

Enfin, on sulfure avec un mélange hydrogène/H₂S (2000 ppm poids d'H₂S) pendant 7 minutes à 500°C (débit: 220 cm³/min)

### exemple 2 (non conforme); préparation du catalyseur B

L'étape a) est réalisée de manière identique à celle de l'exemple 1.

Puis, sous atmosphère d'azote, 650 cm³ d'une solution aqueuse comprenant 0,86 g de rhénium introduit sous forme de perrhénate d'ammonium, 0,886 g d'acide citrique et 0,7 g d'acide thiomalique est chauffée pendant 4 h et mise en contact avec le support contenant le platine pendant 3 heures.

Pour finir, la préparation de ce catalyseur, l'étape c) est réalisée de manière identique à celle de l'exemple 1.

### exemple 3 (non conforme): préparation du catalyseur C

L'étape a) est réalisée de manière identique à celle de l'exemple 1.

Puis, sous atmosphère d'azote, 650 cm³ d'une solution aqueuse comprenant 0.86 g de rhénium introduit sous forme de perrhénate d'ammonium, 0,888 g d'acide citrique, 0,7 g d'acide thlomalique et 2,7 g d'acide oxalique (20 équivalents) est chauffée pendant 4 h et mise en contact avec le support contenant le platine pendant 3 heures.

Pour finir, la préparation de ce catalyseur, l'étape c) est réalisée de manière identique à celle de l'exemple 1.

### exemple 4 (conforme): préparation du catalyseur D

L'étape a) est réalisée de manière identique à celle de l'exemple 1.

Puis, sous atmosphère d'azote, 650 cm³ d'une solution aqueuse comprenant 0,86 g de rhénium introduit sous forme de perrhénate d'ammonium, 0,886 g d'acide citrique, 0.7 g d'acide thlomalique et 288 mg d'hydrazine est chauffée pendant 4 h et mise en contact avec le support contenant le platine pendant 3 heures.

Pour finir, la préparation de ce catalyseur, l'étape c) est réalisée de manière identique à celle de l'exemple 1.

### exemple 5 (non conforme): préparation du catalyseur E

L'étape a) est réalisée de manière identique à celle de l'exemple 1.

Puis, sous atmosphère d'azote, 650 cm³ d'une solution aqueuse comprenant 0,86 g de rhénium introduit sous forme de perrhénate d'ammonium, 0,886 g d'acide citrique, 0,7 g d'acide thiomalique et 1,03 g de chlorure d'étain (II) (SnCl₂) est chauffée pendant 4 h et mise en contact avec le support contenant le platine pendant 3 heures.

Pour finir, la préparation de ce catalyseur, l'étape c) est réalisée de manière identique à celle de l'exemple 1.

### exemple 6 (conforme): préparation du catalyseur F

L'étape a) est réalisée de manière identique à celle de l'exemple 1.

Puis, sous atmosphère d'azote, 650 cm³ d'une solution aqueuse comprenant 0,86 g de rhénium introduit sous forme de perrhénate d'ammonium, 0,886 g d'acide citrique, 0,7 g d'acide thiomalique et 1,88 g d'acide phosphoreux est chauffée pendant 4 h et mise en contact avec le support contenant le platine pendant 3 heures.

Pour finir, la préparation de ce catalyseur, l'étape c) est réalisée de manière identique à celle de l'exemple 1.

### exemple 7 (non conforme): préparation du catalyseur G

L'étape a) est réalisée de manière identique à celle de l'exemple 1.

Puis, sous atmosphère d'azote, 650 cm³ d'une solution aqueuse comprenant 0,86 g de rhénium introduit sous forme de perrhénate d'ammonium, 0,886 g d'acide citrique, 0,7 g d'acide thiomalique et 206 mg d'acide oxalique (0,5 équivalent) est chauffée pendant 4 h et mise en contact avec le support contenant le platine pendant 3 heures.

Pour finir, la préparation de ce Catalyseur, l'étape c) est réalisée de manière identique à celle de l'exemple 1.

### exemple 8 (non conforme): préparation du catalyseur H

L'étape a) est réalisée de manière identique à celle de l'exemple 1.

Puis, sous atmosphère d'azote, 650 cm³ d'une solution aqueuse comprenant 0,86 g de rhénium introduit sous forme de perrhénate d'ammonium, 0,886 g d'acide citrique, 0,7 g d'acide thiomalique et 1,4 g d'acide formique (20 équivalents) est chauffée pendant 4 h et mise en contact avec le support contenant le platine pendant 3 heures.

Pour finir, la préparation de ce catalyseur, l'étape c) est réalisée de manière identique à celle de l'exemple 1.

### exemple 9 (conforme): préparation du catalyseur 1

L'étape a) est réalisée de manière identique à celle de l'exemple 1.

Puis, sous atmosphère d'azote, 650 cm³ d'une solution aqueuse comprenant 0,86 g de rhénium introduit sous forme de perrhénate d'ammonium, 0,886 g d'acide citrique, 0,7 g d'acide thiomalique et 1,6 g de nitrite de sodium est chauffée pendant 4 h et mise en contact avec te support contenant le platine pendant 3 heures.

Pour finir, la préparation de ce catalyseur, l'étape c) est réalisée de manière identique à celle de l'exemple 1.

### exemple 10: tests catalytiques

Les catalyseurs A à I sont testés pour la transformation d'une charge dont les caractéristiques sont les suivantes :

| | | |
|---|---|---|
| masse volumique à 20°C | 0,753 | kg/dm³ |
| indice d'octane recherche | ∼ 60 | |
| teneur en paraffines | 49,4 | % volume |
| teneur en naphtènes | 35,1 | % volume |
| teneur en aromatiques | 15 ,5 | % volume |

Cette transformation est réalisée en présence d'hydrogène à une température de 490°C, une pression totale de 0,3 MPa.

Avant injection de la charge, les catalyseurs sont activés à haute température sous hydrogène pendant 2 heures.

Les performances obtenues après 24 h de fonctionnement sont reportées dans le tableau 1.

**Tableau 1**

| Échantillon | rendement reformat (% poids) | indice d'octane recherche | rendement C5+ (% poids) |
|---|---|---|---|
| A | 90,7 | 99.6 | 72,6 |
| B | 89,5 | 99,6 | 71 |
| C | 91,2 | 99,6 | 73,2 |
| D | 91.5 | 99,6 | 74,3 |
| E | 90,1 | 99,6 | 73,1 |
| F | 91,2 | 99,6 | 73,2 |
| G | 89,9 | 99,6 | 72,8 |
| H | 91,2 | 99,6 | 73,2 |
| I | 90,5 | 99,6 | 72,9 |

Une amélioration surprenante des performances (rendements C5+ et/ou reformat) des catalyseurs D, F et I (conforme à l'invention) est constaté par rapport aux performances des catalyseurs A et B (non conforme à l'invention). De plus, l'introduction du soufre en milieu complexant et réducteur lors de l'étape b) permet d'éviter l'étape de sulfuration finale du catalyseur.

## Revendications

1. Procédé de préparation d'un catalyseur de reformage comprenant un support un métal du groupe VIII et un métal du groupe VIIB, ledit procédé comprenant les étapes suivantes dans l'ordre a) puis b) ou b) puis a) :
- une étape a) d'imprégnation du support par une solution aqueuse d'acide chlorhydrique comprenant un métal du groupe VIII,
- une étape b) d'imprégnation du support par une solution aqueuse comprenant un métal du groupe VIIB et un complexant soufré en environnement réducteur, ledit environnement réducteur est sélectionné dans le groupe constitué par les solutions réductrices comprenant au moins un composé inorganique réducteur sélectionné dans le groupe constitué par les dérivés du phosphore, par les dérivés azotés et par les dérivés soufrés et comprenant, par rapport au métal du groupe VIIB, entre 0.1 à 20 équivalentes de composés inorganiques réducteurs.

2. Procédé de préparation d'un catalyseur de reformage selon la revendication 1 dans lequel le métal du groupe VIII est le platine et le métal du groupe VIIB est le rhénium.

3. Procédé de préparation d'un catalyseur selon l'une des revendications 1 à 2 dans lequel le complexant soufré est un composé dans lequel le soufre n'est lié qu'à un seul atome de carbone.

4. Procédé de préparation d'un catalyseur selon la revendication 3 dans lequel le complexant soufré comprend au moins une fonction sélectionnée dans le groupe constitué par les fonctions thiol, les fonctions thiol en association avec une fonction acide carboxylique, les thiocétones, les thioaldéhydes et les acides thiocarboxyliques.

5. Procédé de préparation d'un catalyseur selon la revendication 4 dans lequel le complexant soufré est sélectionné dans le groupe constitué par:
- le diéthyldithiocarbamate de sodium, les acides thiomalique, thioglycolique, méthanethiolique, éthanethiolique, propanethiolique, l'éthanedithiolique, le propanedithiolique, les acides mercaptoacétique, 3-mercaoptopropionique, 2-mercaptosuccinique, carboxyméthylmercaptosuccinique, 2-mercaptonicotinique,
- les dérivés soufrés de l'EDTA, l'acide thiobis(ethylenenitrilo)tetraacétique, l'éthylenebis(thioethylenenitrilo)tetraacétique, thiobis(ethylenenitrilo)tetraacétique 2-hydrixy-5sulfo-1,3-phenylenbis(méthylenenitrilo)tetraacétique, l'acide (éthanediylidenetetrathio)tetraacétique,
- l'éthanethiol, butanethiols, propanethiols, pentanethiols, hexanethiols, cyclohexanethiols, éthanedithiol, toluenedithiols, dimercapto propanol, l' éthyl xanthate de potassium, la cystéine, 2,3-dimercapto-1-propanol, l'acide 2,3 dimercaptopropane-1sulfonique, penicillamine, l'imidazole-2-thiol, la 2-thaizoline-2-thiol, la pyridine-2-thiol,
- et la thiourée.

6. Procédé de préparation d'un catalyseur selon l'une des revendications 1 à 5 dans lequel le complexant soufré est sélectionné dans le groupe constitué par les sulfates et l'acide sulfurique.

7. Procédé de préparation d'un catalyseur selon la revendication 1 à 6 comprenant à la suite des étapes a) et b), l'étape c) de séchage puis de calcination sous atmosphère inerte ou oxydante, la température de séchage étant comprise entre 80 et 200 °C, la durée de séchage entre 5 minutes et 5 jours, la température de calcination étant comprise entre 300 et 850°C et la durée de calcination entre 5 minutes et 20 heures.

8. Procédé de préparation d'un catalyseur selon la revendication 7 comprenant à la suite de l'étape c), une étape d) de réduction sous hydrogène du catalyseur à une température comprise entre 300 et 850°C pendant 5 minutes à 20 heures.

9. Procédé de préparation d'un catalyseur selon l'une des revendications 1 à 8 comprenant en outre une étape d'imprégnation entre l'étape a) et l'étape b), avant l'étape a) ou après l'étape b) par une solution comprenant au moins un métal promoteur sélectionné dans le groupe formé par le scandium, l'yttrium, l'étain, le germanium, l'indium, l'antimoine, le plomb, le thallium, le gallium, le bismuth, le phosphore, l'arsenic, les lanthanides et les actinides.

10. Procédé de préparation d'un catalyseur selon l'une des revendications 1 à 9 dans lequel le support est une alumine.

11. Procédé de préparation d'un catalyseur selon l'une des revendications 1 à 10 dans lequel la teneur finale en métal du groupe VIII dans le catalyseur est comprise entre 0,01 % poids et 5 % poids, dans lequel la teneur finale en métal du groupe VIIB dans le catalyseur est comprise entre 0,01 % poids et 7 % poids, dans lequel la teneur finale en soufre dans le catalyseur est comprise entre 1 ppm poids et 5 % poids.

12. Procédé de préparation d'un catalyseur selon l'une des revendications 1 à 11 dans lequel la teneur finale en chlore dans le catalyseur est comprise entre 0,1 % poids et 15 % poids.

13. Procédé de préparation d'un catalyseur selon l'une des revendications 2 à 11 dans lequel la solution comprenant du platine est une solution aqueuse d'acide hexachloroplatinique en présence d'acide chlorhydrique.

14. Procédé de préparation d'un catalyseur selon l'une des revendications 2 à 13 dans lequel la solution comprenant du rhénium est de l'acide perrhénique ou du perrhénate d'ammonium.

## Patentansprüche

1. Verfahren zur Herstellung eines Reformingkatalysators, umfassend einen Träger, ein Metall der Gruppe VIII und ein Metall der Gruppe VIIB, wobei das Verfahren die folgenden Schritte in der Reihenfolge a) dann b) oder b) dann a) umfasst:
- einen Schritt a) zum Imprägnieren des Trägers mit einer wässrigen Chlorwasserstoffsäurelösung, umfassend ein Metall der Gruppe VIII,
- einen Schritt b) zum Imprägnieren des Trägers mit einer wässrigen Lösung, umfassend ein Metall der Gruppe VIIB und einen schwefelhaltigen Komplexbildner in einer reduzierenden Umgebung, wobei die reduzierende Umgebung ausgewählt ist aus der Gruppe bestehend aus den reduzierenden Lösungen, umfassend mindestens eine reduzierende anorganische Verbindung ausgewählt aus der Gruppe bestehend aus Phosphorderivaten, aus Stickstoffderivaten und aus Schwefelderivaten und umfassend, bezogen auf das Metall der Gruppe VIIB, zwischen 0,1 bis 20 Äquivalente reduzierender anorganischer Verbindungen.

2. Verfahren zur Herstellung eines Reformingkatalysators nach Anspruch 1, wobei das Metall der Gruppe VIII Platin und das Metall der Gruppe VIIB Rhenium ist.

3. Verfahren zur Herstellung eines Katalysators nach einem der Ansprüche 1 bis 2, wobei der schwefelhaltige Komplexbildner eine Verbindung ist, bei der der Schwefel nur an ein einziges Kohlenstoffatom gebunden ist.

4. Verfahren zur Herstellung eines Katalysators nach Anspruch 3, wobei der schwefelhaltige Komplexbildner mindestens eine Funktion umfasst, ausgewählt aus der Gruppe bestehend aus Thiolfunktionen, Thiolfunktionen in Assoziation mit einer Carbonsäurefunktion, Thioketonen, Thioaldehyden und Thiocarbonsäuren.

5. Verfahren zur Herstellung eines Katalysators nach Anspruch 4, wobei der schwefelhaltige Komplexbildner ausgewählt ist aus der Gruppe bestehend aus:
- Natriumdiethyldithiocarbamat, Thiomalinsäure, Thioglycolsäure, Methanthiolsäure, Ethanthiolsäure, Propanthiolsäure, Ethandithiolsäure, Propandithiolsäure, Mercaptoessigsäure, 3-Mercaoptopropionsäure, 2-Mercaptobernsteinsäure, Carboxymethylmercaptobernsteinsäure, 2-Mercaptonicotinsäure,
- den schwefelhaltigen Derivaten von EDTA, Thio-bis(ethylennitrilo)tetraessigsäure, Ethylen-bis(thioethylennitrilo)tetraessigsäure, Thiobis(ethylennitrilo)tetraessigsäure, 2-Hydroxy-5-sulfo-1,3-phenylen-bis(methylennitrilo)tetraessigsäure, (Ethandiylidentetrathio)tetraessigsäure,
- Ethanthiol, Butanthiolen, Propanthiolen, Pentanthiolen, Hexanthiolen, Cyclohexanthiolen, Ethandithiol, Toluoldithiolen, Dimercaptopropanol, Kaliumethylxanthat, Cystein, 2,3-Dimercapto-1-propanol, 2,3-Dimercaptopropan-1-sulfonsäure, Penicillamin, Imidazol-2-thiol, 2-Thiazolin-2-thiol, Pyridin-2-thiol
- und Thioharnstoff.

6. Verfahren zur Herstellung eines Katalysators nach einem der Ansprüche 1 bis 5, wobei der schwefelhaltige Komplexbildner ausgewählt ist aus der Gruppe bestehend aus Sulfaten und Schwefelsäure.

7. Verfahren zur Herstellung eines Katalysators nach Anspruch 1 bis 6, umfassend im Anschluss an die Schritte a) und b) den Schritt c) zum Trocknen dann zum Kalzinieren unter inerter oder oxidierender Atmosphäre, wobei die Trockentemperatur im Bereich zwischen 80 und 200 °C, die Trockendauer zwischen 5 Minuten und 5 Tagen liegt, wobei die Kalzinierungstemperatur im Bereich zwischen 300 und 850 °C und die Kalzinierungsdauer zwischen 5 Minuten und 20 Stunden liegt.

8. Verfahren zur Herstellung eines Katalysators nach Anspruch 7, umfassend im Anschluss an Schritt c) einen Schritt d) zur Reduktion des Katalysators unter Wasserstoff bei einer Temperatur im Bereich zwischen 300 und 850 °C für eine Dauer von 5 Minuten bis 20 Stunden.

9. Verfahren zur Herstellung eines Katalysators nach einem der Ansprüche 1 bis 8, umfassend ferner zwischen Schritt a) und Schritt b) vor Schritt a) oder nach Schritt b) einen Schritt zum Imprägnieren mit einer Lösung, umfassend mindestens ein Promotormetall, ausgewählt aus der Gruppe gebildet aus Scandium, Yttrium, Zinn, Germanium, Indium, Antimon, Blei, Thallium, Gallium, Wismut, Phosphor, Arsen, den Lanthaniden und den Actinoiden.

10. Verfahren zur Herstellung eines Katalysators nach einem der Ansprüche 1 bis 9, wobei der Träger ein Aluminiumoxid ist.

11. Verfahren zur Herstellung eines Katalysators nach einem der Ansprüche 1 bis 10, wobei der Endgehalt an Metall der Gruppe VIII in dem Katalysator im Bereich zwischen 0,01 Gew.-% und 5 Gew.-% liegt, wobei der Endgehalt an Metall der Gruppe VIIB in dem Katalysator im Bereich zwischen 0,01 Gew.-% und 7 Gew.-% liegt, wobei der Endgehalt an Schwefel in dem Katalysator im Bereich zwischen 1 Gew.-ppm und 5 Gew.-% liegt.

12. Verfahren zur Herstellung eines Katalysators nach einem der Ansprüche 1 bis 11, wobei der Endgehalt an Chlor in dem Katalysator im Bereich zwischen 0,1 Gew.-% und 15 Gew.-% liegt.

13. Verfahren zur Herstellung eines Katalysators nach einem der Ansprüche 2 bis 11, wobei die Platin umfassende Lösung eine wässrige Hexachlorplatinsäurelösung in Gegenwart von Chlorwasserstoffsäure umfasst.

14. Verfahren zur Herstellung eines Katalysators nach einem der Ansprüche 2 bis 13, wobei die Rhenium umfassende Lösung Perrhensäure oder Ammoniumperrhenat ist.

## Claims

1. A process for preparing a reforming catalyst comprising a support, a group VIIIB metal and a group VIIB metal, said process comprising the following steps in the order a) then b) or b) then a):
• a step a) for impregnating the support with an aqueous solution of hydrochloric acid comprising a group VIIIB metal;
• a step b) for impregnating the support with an aqueous solution comprising a group VIIB metal and a sulphur-containing complexing agent in a reducing environment, said reducing environment is selected from the group constituted by reducing solutions comprising at least one inorganic reducing compound selected from the group constituted by phosphorus derivatives, nitrogen-containing derivatives and sulphur-containing derivatives, and comprising, with respect to the group VIIB metal, in the range 0.1 to 20 equivalents of inorganic reducing compounds.

2. A process for preparing a reforming catalyst according to claim 1, in which the group VIIIB metal is platinum and the group VIIB metal is rhenium.

3. A process for preparing a catalyst according to one of claims 1 and 2, in which the sulphur-containing complexing agent is a compound in which the sulphur is bonded to only one carbon atom.

4. A process for preparing a catalyst according to claim 3, in which the sulphur-containing complexing agent comprises at least one function selected from the group constituted by thiol functions, thiol functions in association with a carboxylic acid function, thioketones, thioaldehydes and thiocarboxylic acids.

5. A process for preparing a catalyst according to claim 4, in which the sulphur-containing complexing agent is selected from the group constituted by:
• sodium diethyldithiocarbamate, thiomalic acid, thioglycolic acid, methanethiolic acid, ethanethiolic acid, propanethiolic acid, ethanedithiolic acid, propanedithiolic acid, mercaptoacetic acid, 3-mercaptopropionic acid, 2-mercaptosuccinic acid, carboxymethylmercaptosuccinic acid, 2-mercaptonicotinic acid;
• sulphur-containing derivatives of EDTA, thio-bis(ethylenenitrilo)tetraacetic acid, ethylene-bis(thioethylenenitrilo) tetraacetic acid, thio-bis(ethylenenitrilo) tetraacetic acid, 2-hydroxy-5-sulpho-1,3-phenylene-bis(methylenenitrilo) tetraacetic acid, and (ethanediylidenetetrathio) tetraacetic acid;
• ethanethiol, butanethiols, propanethiols, pentanethiols, hexanethiols, cyclohexanethiols, ethanedithiols, toluenedithiols, di-mercaptopropanol, potassium ethyl xanthate, cysteine, 2,3-dimercapto-1-propanol, 2,3-dimercaptopropane-1-sulphonic acid, penicillamine, imidazole-2-thiol, 2-thiazoline-2-thiol, and pyridine-2-thiol;
• thiourea.

6. A process for preparing a catalyst according to one of claims 1 to 5, in which the sulphur-containing complexing agent is selected from the group constituted by sulphates and sulphuric acid.

7. A process for preparing a catalyst according to claims 1 to 6 comprising, after steps a) and b), a step c) for drying then calcining in an inert or oxidizing atmosphere, the drying temperature being in the range 80°C to 200°C, the drying period between 5 minutes and 5 days, the calcining temperature being in the range 300°C to 850°C and the calcining period between 5 minutes and 20 hours.

8. A process for preparing a catalyst according to claim 7 comprising, after step c), a step d) for reducing the catalyst in hydrogen at a temperature in the range 300°C to 850°C for 5 minutes to 20 hours.

9. A process for preparing a catalyst according to one of claims 1 to 8, further comprising a step for impregnation, between step a) and b), before step a) or after step b), using a solution comprising at least one promoter metal selected from the group formed by scandium, yttrium, tin, germanium, indium, antimony, lead, thallium, gallium, bismuth, phosphorus, arsenic, lanthanides and actinides.

10. A process for preparing a catalyst according to one of claims 1 to 9, in which the support is an alumina.

11. A process for preparing a catalyst according to one of claims 1 to 10, in which the final quantity of the group VIIIB metal in the catalyst is in the range 0.01% by weight to 5% by weight, in which the final quantity of the group VIIB metal in the catalyst is in the range 0.01% by weight to 7% by weight, and in which the final sulphur content in the catalyst is in the range 1 ppm by weight to 5% by weight.

12. A process for preparing a catalyst according to one of claims 1 to 11, in which the final quantity of chlorine in the catalyst is in the range 0.1% by weight to 15% by weight.

13. A process for preparing a catalyst according to one of claims 2 to 11, in which the solution comprising platinum is an aqueous solution of hexachloroplatinic acid in the presence of hydrochloric acid.

14. A process for preparing a catalyst according to one of claims 2 to 13, in which the solution comprising rhenium is perrhenic acid or ammonium perrhenate.
